Europäisches Patentamt

European Patent Office

Office européen des brevets

(11) Numéro de publication: **0 263 042**
**B1**

# (12) FASCICULE DE BREVET EUROPEEN

(45) Date de publication du fascicule du brevet:
**17.01.90**

(51) Int. Cl.⁴: **F16K 41/02**, F16J 15/18

(21) Numéro de dépôt: **87420248.4**

(22) Date de dépôt: **23.09.87**

(54) **Système d'étanchéité entre tige et corps de vanne et douille extractible correspondante.**

(30) Priorité: **26.09.86 FR 8613643**

(43) Date de publication de la demande:
**06.04.88 Bulletin 88/14**

(45) Mention de la délivrance du brevet:
**17.01.90 Bulletin 90/3**

(84) Etats contractants désignés:
**AT BE CH DE ES GB GR IT LI LU NL SE**

(56) Documents cités:
**DE-A- 2 319 607**
**DE-A- 2 460 456**
**DE-A- 3 345 116**
**DE-B- 1 267 923**
**DE-C- 3 302 683**
**GB-A- 934 055**
**US-A- 2 486 939**
**US-A- 3 257 095**
**US-A- 4 299 395**

**PATENT ABSTRACTS OF JAPAN,**
**vol. 6, no. 89 (M-207)[1234]; & JP-A-58 13 260 (OOISHI**
**KIKAI SEISAKUSHO K.K.) 25-01-1983**

(73) Titulaire: **LE CARBONE LORRAINE, Tour Manhattan - La Défense 2, 5-6, place de l'Iris,, F-92400 Courbevoie(FR)**

(72) Inventeur: **Chabance, Joel, Montoisel Pralong, F-42600 Montbrison(FR)**

(74) Mandataire: **Vanlaer, Marcel et al, PECHINEY 28, rue de Bonnel, F-69433 Lyon Cédex 3(FR)**

## Description

La présente invention concerne un système d'étanchéité entre la tige ou axe de manoeuvre d'une vanne ou d'un robinet et le corps de cette vanne ou de ce robinet, pour des utilisations à des températures pouvant aller de -245°C à 1050°C, avec des pressions dans la tuyauterie ou la cavité étanche allant elles-même typiquement de 0,1 Pa à 40 MPa.

Les systèmes d'étanchéité connus entre tige de manoeuvre ou "tige de vanne" et corps de vanne, appelés couramment "dispositifs presse-étoupe" comportent des garnitures ou joints d'étanchéité compressibles, venant se loger dans la chambre annulaire que définissent entre eux à cet effet la tige et le corps de vanne, et des moyens de serrage axial des joints comprenant une pièce d'appui ou fouloir s'engageant dans la chambre annulaire pour les comprimer. La qualité et la hauteur d'empilage des joints d'étanchéité ainsi que leur taux de compression en service varient avec les conditions d'utilisation: température, pression, nature du fluide étanché, exigences d'étanchéité. Parmi les types de joints utilisés, on peut citer des garnitures amiante-graphite, et des bagues en graphite expansé moulé et comprimé.

Le problème de démontage du dispositif presse-étoupe avec extraction des joints d'étanchéité se pose soit lorsqu'il y a fuite ou dégradation de l'étanchéité, soit pour l'entretien préventif. Ainsi, dans les centrales productrices d'électricité et spécialement dans les centrale nucléaires, un entretien préventif est fait assez fréquemment, par exemple tous les deux ans, pour changes les pièces d'usure à savoir des joints et des pièces d'operculage.

On constate alors que les joints usagés collent aux surfaces latérales de la chambre où ils sont insérés, et on peut citer deux méthodes utilisées pour ·obtenir un débouchage faute de pouvoir extraire les joints: de façon artisanale, utilisation de tire-bouchons à manche souple, et, dans l'entretien systématique des centrales énergétiques, perçage laser avec injection d'eau sous pression. Ces méthodes sont coûteuses ou consommatrices de temps.

Le document US-A 3 257 095 décrit par ailleurs un système d'étanchéité entre un arbre cylindrique circulaire et un corps de vanne, définissant entre eux une chambre annulaire se terminant par un fond, ce système comprenant une douille extractible s'engageant dans ladite chambre annulaire. Cette douille comporte un fond annulaire traversé par l'arbre et, en dehors de la chambre annulaire, un rebord d'extrémité utilisé pour le serrage d'un joint annulaire disposé entre le fond de la douille et le fond de la chambre annulaire, permettant également après démontage de ses moyens de fixation l'extraction de la douille par le remplacement des joints.

Dans ce système, le rebord d'extrémité de la douille empêche son introduction complète dans la chambre annulaire. La demanderesse a essayé de mettre au point un système d'étanchéité simple comprenant une douille, pouvant être totalement contenue dans la chambre annulaire comprise entre une tige ou arbre et un corps de vanne, et des moyens d'extraction appropriés, ce système devant aussi éviter les inconvénients précités.

## EXPOSE DE L'INVENTION

L'invention a pour objet un système d'étanchéité entre une tige ou arbre cylindrique circulaire et un corps de vanne définissant entre eux une chambre annulaire se terminant par un fond et comportant comme il est connu par le document cité:

a/ un dispositif d'étanchéité extractible comprenant lui-même:

a.1) une douille extractible, s'encastrant dans ladite chambre annulaire, comportant une paroi latérale dont la surface intérieure est au moins en partie cylindrique et un fond annulaire traversé par ladite tige, et comportant aussi des moyens particuliers d'extraction;

a.2) des moyens d'étanchéité annulaires, insérés dans la douille et comprenant une ou plusieurs bagues d'étanchéité compressibles;

a.3) un joint d'étanchéité annulaire, disposé entre le fond de la douille et le fond ou une entretoise reposant sur le fond de la chambre annulaire

b/un ou des moyens de serrage axial comprimant lesdits moyens d'étanchéité annulaires entre ce ou ces moyens de serrage et le fond annulaire de la douille, et un ou des moyens de serrage axial comprimant ledit joint d'étanchéité annulaire entre le fond de la douille et le fond de la chambre annulaire ou sur une entretoise annulaire reposant sur ce fond.

Selon l'invention:

(a'.1) la douille ne présente pas de partie débordant transversalement par ·rapport à sa paroi latérale, de sorte qu'elle peut être entièrement contenue dans une chambre annulaire, et ses moyens d'extraction sont portés par l'extrémité haute de ladite paroi latérale;

(b') les moyens de serrage axial comportent une portion d'appui annulaire rentrant à l'intérieur de la douille, comprimant à la fois les moyens d'étanchéité et le joint d'étanchéité annulaire;

(c) le système comporte en outre un moyen externe d'extraction coopérant avec les moyens d'extraction portés par la douille.

La ou les bagues d'étanchéité compressibles insérées dans la douille assurent essentiellement, après serrage axial qui entraîne leur écrasement avec un gonflement latéral, l'étanchéité entre la tige de vanne et la surface intérieure de la paroi latérale de la douille, cette surface intérieure étant typiquement cylindrique de révolution au moins sur toute la hauteur d'empilement des moyens d'étanchéité annulaires. La portion d'extrémité haute ou "extrémité haute" de la paroi latérale de la douille laisse le passage libre pour l'introduction des moyens d'étanchéité annulaires dans la douille, elle porte des moyens d'accrochage ou moyens d'extraction de la douille après usage qui sont nécessairement associés avec un moyen d'extraction externe approprié. Cette extrémité haute de la paroi latérale de la douille est soit circulaire continue comme le reste de la paroi latérale, soit discontinue sous forme de pattes portant les moyens d'extraction.

Le fond de la chambre annulaire est soit plat, soit incliné à moins de 60°. Dans le deuxième cas on utilise de préférence une entretoise de forme pour obtenir une face d'appui plane. Le joint d'étanchéité annulaire ou joint inférieur assurant l'étanchéité entre la face inférieure du fond de la douille et le fond ou l'entretoise du fond de la chambre annulaire se présente alors typiquement sous deux formes:

- soit un joint compressible plat, par exemple en élastomère ou en amiante-caoutchouc, la face inférieure de la douille étant plane;

- soit, de préférence, un joint torique classique ou un joint annulaire en graphite expansé comprimé, la face inférieure du fond annulaire de la douille comportant une gorge ou rainure dans laquelle est encastré dans le joint. Cette disposition préférée permet le bon centrage du joint, et aussi le réglage à l'avance du niveau d'étanchéité grâce au choix de la qualité du joint et de sa surépaisseur par rapport à la gorge, le taux de compression étant celui du contact métal-métal.

De façon à ne pas blesser la tige de vanne, le bord intérieur de son fond annulaire a un jeu par rapport à cette tige typiquement compris entre 0,1 et 1 mm au rayon. Pour éviter des effets d'extrusion des bagues d'étanchéité lors de la compression, lorsque ce jeu est un peu fort, par exemple supérieur à 0,3 mm au rayon dans le cas de bagues en graphite, il est fortement souhaitable de placer dans la douille deux bagues ou rondelles annulaires non compressibles, disposées respectivement en-dessous et au-dessus de la bague ou des bagues d'étanchéité empilées. Ces bagues ou rondelles non compressibles souvent appelées "bagues antiextrusion" ont un jeu par rapport à la tige de vanne inférieur ou égal à 0,15 mm au rayon, et un jeu faible et de préférence inférieur à 0,2 mm au diamètre par rapport à la surface intérieure latérale de la douille.

Ce sont typiquement des rondelles plates, en acier avec sur leur bord intérieur une surface traitée anti-friction pour supprimer tout risque de blesser la tige de vanne, ou encore en bronze ou en fonte. Une ou plusieurs bagues d'étanchéité en graphite expansé moulé et comprimé de masse spécifique comprise entre 1,4 et 1,9 g/cm3 forment ainsi, en association avec deux bagues anti-extrusion, des moyens d'étanchéité annulaires particulièrement bien adaptés au système d'étanchéité de l'invention.

La douille est habituellement en métal ou alliage compatible avec le fluide à étancher, par exemple dans le même matériau que le corps de vanne.

Quand les moyens de serrage axial existants comportent un fouloir dont la pièce d'appui annulaire peut s'engager dans la chambre annulaire mais pas à l'intérieur de la douille extractible, on complète ces moyens de serrage par une bague de compression intermédiaire de diamètre intérieur supérieur au diamètre de la tige de vanne et de diamètre extérieur inférieur au diamètre de la surface intérieure cylindrique de la douille. On peut remarquer que, lorsque cette bague de compression a des jeux faibles par rapport à la tige et par rapport à l'intérieur de la douille, elle peut éventuellement remplacer la bague antiextrusion située au-dessus de la ou des bagues d'étanchéité empilées.

Dans le cas habituel où la douille est entièrement contenue dans la chambre annulaire, les moyens d'extraction ou d'accrochage portés par le haut de cette douille sont nécessairement associés à un moyen d'extraction externe approprié. Les moyens d'extraction portés par l'extrémité haute de la douille constituant aussi l'extrémité de sa paroi latérale, sont par exemple, en tenant compte en particulier pour leur choix des possibilités de réalisation et de la résistance mécanique nécessaire pour l'extraction:

- au moins 2 trous radiaux, borgnes ou traversants, le moyen d'extraction externe comportant des crochets s'engageant dans ces trous, particulièrement lorsque l'épaisseur est faible;

- un ou plusieurs trous filetés dans l'épaisseur, d'axe longitudinal, le moyen d'extraction externe comportant alors une ou des tiges filetées se vissant dans ce ou ces trous filetés,

- un filetage intérieur du haut de la douille, le moyen d'extraction externe comportant un tube creux de damètre intérieur supérieur au diamètre de la tige de vanne, dont la portion d'extrémité au moins est filetée et se visse dans ledit filetage intérieur du haut de la douille. Dans le cas où la tige de vanne est démontée avant l'extraction de la douille, ce tube creux peut être remplacé par une barre ou tige portant le même filetage.

La douille de l'invention peut avoir également, dans le cas où le moyen de compression laisse le dégagement correspondant, une extrémité haute dépassant de la chambre annulaire. Cette disposition nouvelle peut permettre une extraction plus simple, les moyens d'extraction portés par le haut de la douille étant alors son extrémité qui dépasse, éventuellement munie des moyens d'accrochage décrits précédemment, et le moyen d'extraction externe étant tout moyen convenable, y compris l'extraction à la main ou bien avec l'un des moyens externes déjà signalés.

Lorsque le serrage direct du joint inférieur annulaire situé entre le fond de la douille et le fond de la chambre annulaire est nécessaire ou souhaitable, par exemple dans le cas de très fortes pressions à étancher, cette disposition permet aussi d'assurer simplement ce serrage à l'aide d'une bride fixée sur le corps de vanne. Il est possible d'obtenir un tel serrage direct dans le cas d'une douille ne dépassant pas de la chambre annulaire, grâce à une bride usinée avec une ou plusieurs parties en relief, par exemple une virole, qui appuient directement sur la douille, mais cette structure équivalente à la précédente est évidemment plus délicate à réaliser.

Un moyen d'extraction externe particulièrement adapté aux douilles portant à leur extrémité haute un filetage intérieur d'extraction a été mis au point, il permet une extraction parfaitement axiale et donc de mieux préserver les surfaces latérales de la chambre annulaire et de la tige de vanne, et aussi l'état des moyens d'étanchéité annulaires. .

Ce moyen d'extraction externe comprend au moins;

d) un tube creux fileté, de diamètre intérieur supérieur au diamètre de la tige de vanne, se vissant dans le filetage intérieur du haut de la douille, ainsi que dans l'écrou (e);

e) un écrou d'extraction fileté intérieurement avec le même filetage que celui du haut de la douille;

f) un support d'extraction, permettant le maintien de l'écrou d'extraction, pendant sa rotation, à hauteur au moins égale à la hauteur totale de la douille extractible diminuée de sa hauteur de vissage par le tube fileté.

Comme cela sera illustré par un exemple, ce moyen d'extraction externe comporte avantageusement la disposition suivante assurant son bon fonctionnement; l'écrou (e) et le support (f) forment ensemble une pièce d'extraction dont la base s'appuie sur le corps de vanne autour de l'extrémité ouverte de la chambre annulaire, et qui comprend une cavité ou logement centrale permettant de recevoir le dispositif d'étanchéité lors de son extraction de la chambre annulaire.

L'invention a encore pour objet la douille extractible elle-même, utilisée pour réaliser l'étanchéité entre une tige de vanne et un corps de vanne définissant entre eux une chambre annulaire, dans une version préférentielle. Cette douille comporte une paroi latérale dont la surface intérieure est au moins en partie cylindrique circulaire et un fond annulaire dont le bord intérieur circulaire a un diamètre supérieur d'au moins 0,2 mm au diamètre de la tige de vanne, la face inférieure du fond de cette douille portant une gorge circulaire de section droite en U, et elle comporte en outre des moyens d'extraction portés par l'extrémité haute de la douille, ces moyens d'extraction faisant partie du groupe constitué par: filetage intérieur, au moins 2 trous radiaux, au moins un trou fileté dans l'épaisseur.

Dans le cas où l'ensemble de commande de la vanne ne peut pas être démonté, l'extraction de la douille étant de ce fait impossible, il y a lieu d'utiliser un dispositif d'étanchéité selon l'invention démontable:

- la douille est composée de plusieurs parties démontables, à savoir au moins 2 parties cylindriques semi-annnulaires jointives comportant chacune une portion de fond annulaire et des moyens d'extraction, et un fond annulaire extractible sur lequel ces parties cylindriques s'appuient et qui porte sous sa face inférieure une gorge dans laquelle s'encastre le joint d'étanchéité annulaire du cas général, et sur sa face supérieure des moyens d'extraction, par exemple des trous filetés;

- les moyens d'étanchéité annulaires comprennent éventuellement des bagues d'étanchéité compressibles et segmentés en plusieurs parties jointives, les jonctions étant de préférence décalées par rapport aux jonctions des parties cylindriques latérales de la douille.

L'utilisation de bagues anti-extrusion au fond présentant des difficultés de positionnement et étant donc déconseillé, le fond annulaire extractible a de préférence un orifice central bien ajusté par rapport à la tige de vanne, ayant ainsi un diamètre inférieur ou égal au diamètre de cette tige augmenté de 0,3 mm. Et pour avoir une bonne étanchéité compte tenu des jonctions entre portions de fond annulaire des parties cylindriques, il est important que la surface supérieure du fond extractible définisse avec la tige un logement annulaire dans lequel viennent s'insérer les portions de bagues d'étanchéité compressibles. La disposition optimale pour l'étanchéité est alors obtenue avec des portions de bagues inférieures, typiquement 2 portions de bagues jointives en graphite expansé moulé et comprimé, qui s'appuient sur les portions de fond annulaire et comportent des parties centrales annulaires en surépaisseur, ces parties se plaçant au travers des plans de joints entre portions de fond annulaire de la douille et fond annulaire extractible et s'appliquant dans le logement annulaire ainsi formé entre le fond extractible et la tige de vanne.

Dans ce dispositif démontable dont le fond est ainsi dédoublé en des fonds jointifs permettant l'extraction des parties de bagues et en un fond annulaire extractible associé à un joint annulaire continu réalisant l'étanchéité sur le fond de la chambre annulaire, ce fond annulaire extractible peut être extrait pour contrôle et/ou remplacement du joint annulaire moins souvent que les parties cylindriques portant les parties de bagues d'étanchéité, ce qui est fort intéressant en pratique.

Dans ce cas du dispositif d'étanchéité démontable, les moyens d'extraction de la douille et les moyens d'extraction externes peuvent être conservés dans leurs principes. Ainsi, dans le cas où la douille démontable comporte 2 parties cylindriques jointives hémicirculaires, l'extraction par filetage et tube fileté sera possible, avec d'une part sur ces parties jointives des parties filetées réalisant par rapprochement un filetage intérieur d'extraction de la douille, et avec d'autre part un tube fileté reconstitué à partir de 2 parties longitudinales et une pièce d'extraction (écrou + support) également en 2 parties reconstituées.

## EXEMPLES

La figure 1 représente un dispositif d'étanchéité extractible selon l'invention, en coupe par un plan passant par l'axe de la tige de vanne.

Les figures 2a, 2b, 2c représentent des moyens d'extraction portés par la douille extractible de l'invention.

La figure 3 représente, en coupe par un plan passant par l'axe de la tige de vanne, le dispositif d'étanchéité surmonté d'un moyen d'extraction externe, à gauche en position initiale vissée, à droite après extraction hors de la chambre annulaire.

La figure 4 représente un dispositif d'étanchéité extractible démontable selon l'invention, en demi-coupe axiale passant par le plan de jonction des 2 parties cylindriques jointives de la douille.

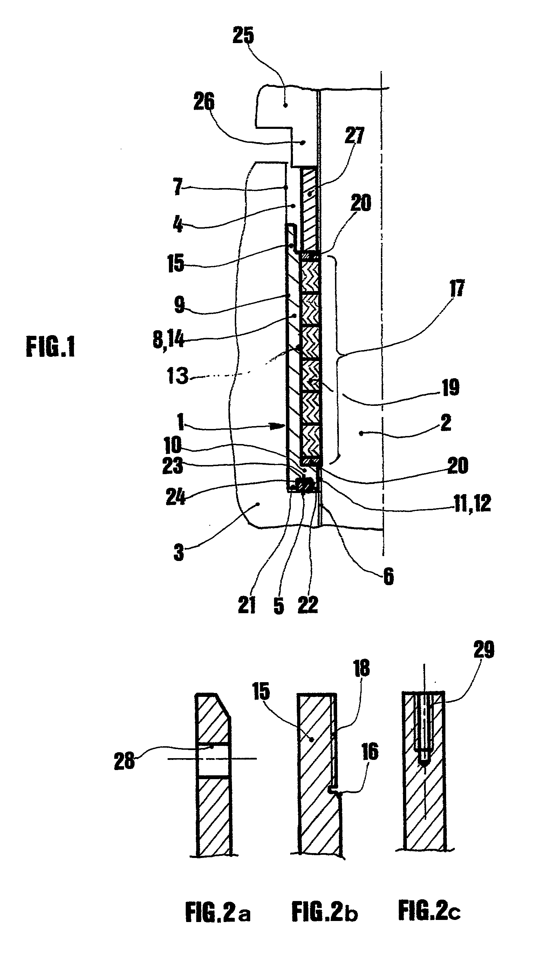

Les figures autres que les figures 2a et 2c correspondent à l'exemple de système d'étanchéité décrit ci-dessous, utilisable avec des vannes pour canalisations contenant de la vapeur d'eau surchauffée à environ 10 MPa -200°C.

Le dispositif d'étanchéité (1) selon l'invention est associé à une tige de vanne (2) de diamètre 30,0 mm et à un corps de vanne (3) définissant avec la tige (2) une chambre annulaire (4) de diamètre 46,0 mm, de profondeur 84 mm, et se terminant par un fond plat (5) percé d'un orifice (6) de passage de la tige (2), orifice (6) de même axe de symétrie de révolution que la surface latérale cylindrique (7) de la chambre (4) et de diamètre 31,0 mm.

La douille extractibe (8) est an acier inoxydable AISI 316L, de hauteur totale 64 mm et de diamètre extérieur 45,9 mm, avec une surface latérale extérieure (9) lisse et cylindrique circulaire sur toute cette hauteur. Elle comporte un fond annulaire (10) d'épaisseur totale 6 mm dont le bord intérieur (11) ou bord de son orifice (12) de passage de la tige, a un diamètre de 31 mm. Au-dessus de ce fond (10), la surface intérieure (13) de la paroi latérale (14) de la douille (8) est cylindrique circulaire et de diamètre 40,0 mm sur une hauteur de 51 mm, la portion d'extrémité haute (15) de la douille comportant (figure 2b), au-dessus d'un chanfrein (16) destiné à faciliter l'introduction des moyens d'étanchéité annulaires (17), une partie filetée intérieurement (18) M 42,5 mm x pas 1,5 mm sur une hauteur de 6 mm.

Les moyens d'étanchéité annulaires (17) insérés dans la douille (8) (figure 1) comprennent 6 bagues (19) FARGRAF (marque déposée de la société CEFILAC) en graphite expansé, moulé et comprimé chacune de diamètre intérieur 30 mm X diamètre extérieur 40 mm x épaisseur 7,5 mm et de masse spécifique 1,6 g/cm3, l'empilage de ces bagues (19) étant encadré par 2 bagues anti-extrusion (20) placées respectivement au-dessous et au-dessus de cet empilage, chacune étant de diamètre intérieur 30,2 mm x diamètre extérieur 39,95 mm x épaisseur 2 mm, en acier avec traitement de surface anti-friction permettant le frottement occasionnel avec la tige de vanne (2) sans que cela blesse cette tige (2).

La face inférieure (21) du fond (10) de la douille comporte une rainure circulaire (22) de même axe de symétrie de révolution de dimensions diamètre intérieur 34 mm x diamètre extérieur 42 mm x profondeur 3,2 mm, de section droite en U, c'est-à-dire à fond plat (23) et à surface latérale perpendiculaire à ce fond. L'étanchéité extérieure de la douille (2) assurée par un joint inférieur (24) ORIGRAF (marque déposée de CEFILAC) en graphite expansé moulé et comprimé de masse spécifique 1,8 g/cm3, de dimensions: diamètre intérieur 34 mm x diamètre extérieur 42 mm x x épaisseur ou hauteur 44 mm. Ce joint (24) est encastré dans la rainure (22) et l'étanchéité en service est obtenu par serrage axial jusqu'au contact de la face (21) du fond (10) de la douille (8) avec le fond plat (5) de la chambre annulaire (4).

Les moyens de serrage axial comprimant toutes les bagues d'étanchéité (19,24) comportent un fouloir classique (25) de portion d'appui (26) du diamètre intérieur 31 mm et de diamètre extérieur 45,8 mm, venant du dispositif antérieur et ne rentrant pas dans la douille (8), et une bague de compression intermédiaire (27) de diamètres intérieur et extérieur 31 et 39,8 mm et de hauteur 20 mm.

Les figures 2a et 2c représentent respectivement, en dehors de cet exemple particulier, des moyens d'extraction portés par le haut d'autres douilles selon l'invention, à savoir: des trous radiaux (28) (figure 2a), et des trous (29) filetés dans l'épaisseur (figure 2c).

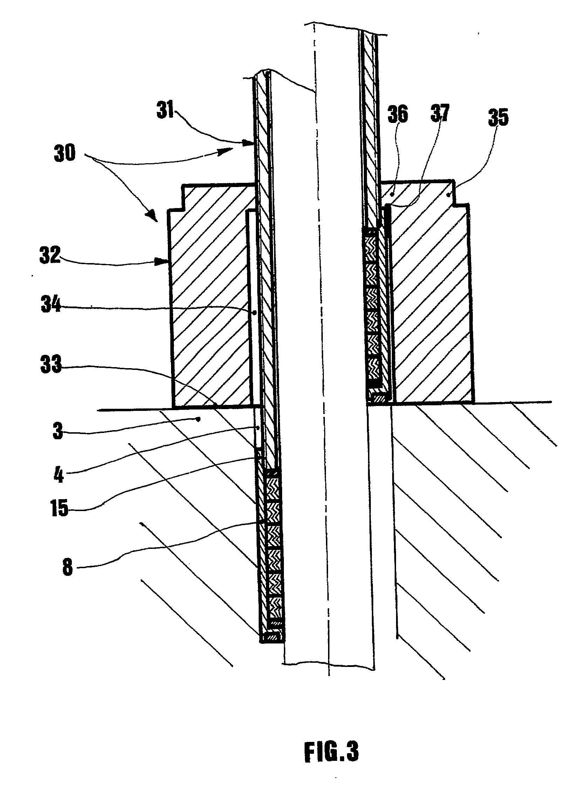

L'extrémité haute (15) de la douille (8) est enfoncée de près de 20 mm dans la chambre annulaire (4) (figures 1 et 3), et le moyen d'extraction externe (30) utilisé pour démonter le dispositif d'étanchéité (1) comporte seulement deux pièces (31) et(32):
- un tube creux en bronze (31) matériau ne blessant pas les garnitures d'étanchéité, de diamètre intérieur 32 mm, fileté extérieurement M 42,5 mm x pas 1,5 mm sur toute sa longueur de 220 mm sauf les chanfreins d'extrémités;
- une pièce d'extraction (32) en acier inoxydable, de diamètre extérieur 75 mm et de hauteur totale 76 mm, comportant à partir de sa face inférieure d'appui (33) un logement intérieur axial(34) de diamètre 46 mm et de hauteur 66 mm, et à sa partie supérieure une portion usinée latéralement en forme de six pans (35) de 60 mm sur plats x hauteur 10 mm avec au centre un orifice fileté M 42,5 mm x pas 1,5 mm traversant le voile supérieur (36) du logement (34), voile ici confondu avec le six pans (35) formant écrou d'extraction.

L'extraction du dispositif d'étanchéité (1) se fait comme suit: on visse le tube fileté (31) dans la douille (8) jusqu'au blocage, puis on fait descendre la pièce d'extraction (32) par vissage de cette pièce sur le tube fileté (31) jusqu'à contact avec le corps de vanne (3). Puis, ayant immobilisé le tube fileté (31) en rotation soit manuellement, soit à l'aide d'une clef, le tube (31) portant à son extrémité supérieure un six pans usiné dans sa masse de 36 mm sur plats x hauteur 8 mm, on continue à visser la pièce d'extraction (32) sur le tube (31) à l'aide de son six pans (35) et d'une clef. On fait ainsi monter le tube fileté (31) sur lequel est accroché la douille extractible (8), et on continue le vissage jusqu'à butée du haut de cette douille (8) sur le haut (37) du logement intérieur (34).

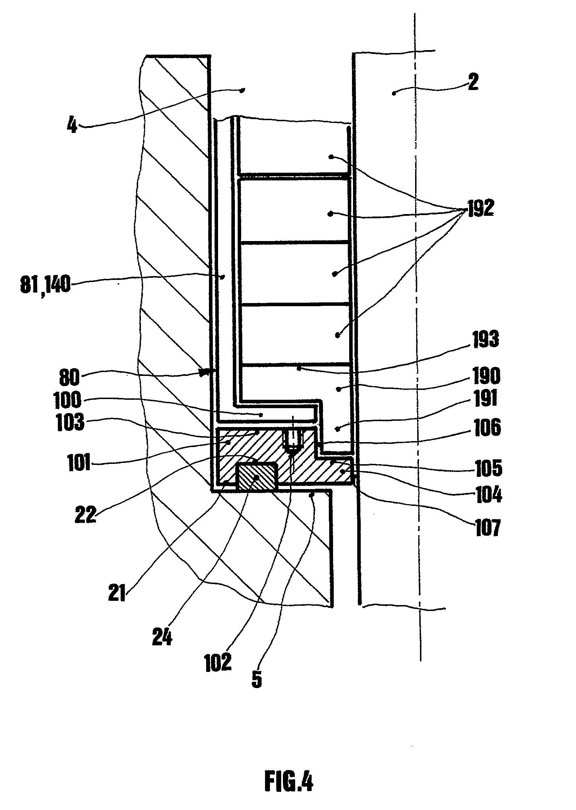

La figure 4 représente schématiquement un dispositif d'étanchéité dont la mise en place et l'extraction peuvent être effectuées sans que l'extrémité d'entraînement de la tige de vanne (2) soit libérée. La douille (80) est composée de 2 parties hémicylindriques jointives (81), comportant chacune une paroi latérale cylindrique (140) et une portion de fond annulaire (100) ayant un jeu de plusieurs mm par rapport à la tige de vanne (2), et d'un fond complémentaire annulaire (101), extractible au moyen de tiges filetées se vissant dans 2 trous filetés (102) portés par sa face supérieure (103). Ce fond extractible (101) comporte sous sa face inférieure (21) un joint d'étanchéité inférieur (24) en graphite expansé moulé et comprimé, réalisant l'étanchéité sur le fond (5) de la chambre annulaire (4). Le fond (101) comporte une zone annulaire centrale (104) de moindre épaisseur, la surface en creux correspondante (105) définissant avec la tige de vanne (2) un logement annulaire (106). L'orifice central (107) de ce fond a un jeu faible par rapport à la tige de vanne (2), la surface (105) ayant alors un rôle anti-extrusion. Deux portions de bagues d'étanchéité (190) en graphite expansé moulé et comprimé, comportant une partie annulaire intérieure d'épaisseur renforcée (191) et orientées de sorte que leurs plans de joints soient éloignés des plans de joints des 2 parties hémicylindriques (81), constituent alors la base de l'empilement de bagues d'étanchéité (190, 192), leur partie annulaire plus épaisse (191) venant d'une part obstruer les plans de joints entre les portions de fond annulaire (100) et le fond annulaire extractible (101) et entre les deux portions de fond annulaires (100), et d'autre part s'encastrer dans le logement annulaire (106) en s'appliquant sur son fond (105). En illustration de ces dispositions, on peut donner l'exemple pratique suivant relatif à une tige de vanne (2) de diamètre 30,0 mm et à une chambre annulaire de diamètre 46,0 mm comme dans les exemples précédents, sans revenir sur les moyens d'extraction qui ne sont pas figurés:

- le fond extractible (101), en acier avec un traitement de surface anti-friction des surfaces pouvant frotter sur la tige de vanne (2), a un orifice central (107) de 30,2 mm de diamètre, une épaisseur totale de 10 mm et une zone annulaire centrale d'épaisseur 6 mm et de diamètre extérieur 35 mm. Son diamètre extérieur est de 45,95 mm. Sa face inférieure (21) comporte la même gorge ou rainure (22) que précédemment, avec le même joint inférieur (24) encastré dans cette gorge (22);
- les parties hémicylindriques (81) ont une épaisseur de 3 mm, aussi bien pour leurs parois latérales (140) que pour leurs portions de fond annulaires (100), et le diamètre intérieur de ces portions annulaires jointives (100) est de 35 mm;
- les moyens d'étanchéité annulaires segmentés chacun en deux parties jointives comportent:
. à la base de l'empilage des joints en graphite expansé moulé et comprimé, deux portions de bagues inférieures de forme jointives (190),limitées par une même surface supérieure plane (193) et comprenant chacune schématiquement une partie annulaire extérieur ⌀ 35 x ⌀ 40 mm x épaisseur 5 mm venant s'appliquer sur la portion de fond (100), et une partie annulaire intérieure (191) ⌀ 30 x ⌀ 35 x épaisseur 12 mm qui s'encastre dans le logement annulaire (106) et s'applique sur le fond de la surface en creux (105), réalisant ainsi une excellente étanchéité en service;
. au-dessus de cette bague inférieure de forme en 2 portions (190), 5 bagues (192) ⌀ 30 x ⌀ 40 mm x 7,5 mm en graphite expansé moulé et comprimé de même qualité (FARGRAF, marque déposée) et de masse spécifique 1,6 g/cm3, chacune en deux demi-bagues jointives;
. en tête de l'empilage, une bague anti-extrusion en 2 parties jointives, réalisant les mêmes caractéristiques que les bagues (20) précédentes.

Le système d'étanchéité de l'invention peut être utilisé avec tous types de robinets ou vannes permettant sa mise en place, habituellement dans les limites déjà indiquées au début de cette description.

**Revendications**

1. Système d'étanchéité entre une tige cylindrique circulaire (2) et un corps de vanne (3) définissant entre eux une chambre annulaire (4) se terminant par un fond (5) et comportant:

a/ un dispositif d'étanchéité extractible (1) comprenant lui-même:

a.1) une douille extractible (8) s'encastrant dans ladite chambre annulaire (4) comportant une paroi latérale (14) dont la surface intérieure (13) est au moins en partie cylindrique et un fond annulaire (10) traversé par la tige (2), et comportant aussi des moyens d'extraction (15, 18, 28, 29);

a.2) des moyens d'étanchéité annulaires (17) insérés dans la douille (8) et comprenant une ou plusieurs bagues d'étanchéité (19) compressibles;

a.3) un joint d'étanchéité annulaire (24), disposé entre le fond (10, 21) de la douille (8) et le fond (5) ou une entretoise reposant sur le fond (5) de la chambre annulaire (4);

b/ un ou des moyens de serrage axial (26, 27) comprimant lesdits moyens d'étanchéité (17) entre ce ou ces moyens de serrage (27) et le fond annulaire (10) de la douille (8), et un ou des moyens de serrage axial (26, 27) comprimant ledit joint d'étanchéité annulaire (24) entre le fond (10) de la douille (8) et le fond (5) de la chambre annulaire (4) ou sur l'entretoise reposant sur ce fond (5);

caractérisé en ce que:

(a'.1) la douille (8) ne présente pas de partie débordant transversalement par rapport à sa paroi latérale (14), de sorte qu'elle peut être entièrement contenue dans la chambre annulaire (4), et ses moyens d'extraction (15, 18, 28, 29) sont portés par l'extrémité haute (15) de ladite paroi latérale (14);

(b') les moyens de serrage axial (26, 27) comportent une portion d'appui annulaire (27) rentrant à l'intérieur de la douille (8), comprimant à la fois les moyens d'étanchéité (17) et le joint d'étanchéité annulaire (24);

(c) le système comporte en outre un moyen externe d'extraction (30) coopérant avec les moyens d'extraction (18) portés par la douille (8).

2. Système selon la revendication 1, caractérisé en ce que la face inférieure (21) du fond annulaire (10) de la douille (8) comporte une gorge (22) dans laquelle s'encastre ledit joint d'étanchéité annulaire (24).

3. Système selon l'une quelconque des revendications 1 ou 2, caractérisé en ce que les moyens d'étanchéité annulaires (17) insérés dans la douille (8) comprennent deux bagues ou rondelles annulaires non compressibles (20) ayant chacune un diamètre intérieur au plus égal au diamètre de la tige (2) augmenté de 0,3 mm, ces bagues ou rondelles (20) étant disposées respectivement en-dessous de et au-dessus de la bague (19) ou de l'empilage de bagues d'étanchéité compressibles (19).

4. Système selon la revendication 3, caractérisé en ce que les moyens d'étanchéité annulaires (17) comprennent une ou plusieurs bagues d'étanchéité (19) en graphite expansé moulé et comprimé de masse spécifique comprise entre 1,4 et 1,9 g/cm3.

5. Système selon la revendication 1, dans lequel les moyens de serrage axial (26, 27) comportent à la fois un fouloir (25) dont la pièce d'appui (26) peut s'engager dans la chambre annulaire (4) mais pas dans la douille extractible (8) et une bague de compression intermédiaire (27) de diamètre intérieur supérieur au diamètre de la tige de vanne (2) et de diamètre extérieur inférieur au diamètre de la surface intérieure cylindrique (13) de la douille (8).

6. Système selon la revendication 1, dans lequel les moyens d'extraction portés par la douille comprennent l'extrémité haute (15) de sa paroi latérale (14), cette extrémité (15) dépassant de la chambre annulaire (4) lorsque la douille (8) y est encastrée.

7. Système selon l'une quelconque des revendication 1 ou 6, dans lequel les moyens de serrage axial (26, 27) comprennent une bride fixée sur le corps de vanne (3) appuyant sur l'extrémité haute (15) de la paroi latérale (14) de la douille (8)

8. Système selon la revendication 1, caractérisé en ce que les moyens d'extraction portés par le haut (15) de la douille (8) consistent en un filetage intérieur (18) et en ce que le moyen d'extraction externe (30) comprend au moins:

d) un tube creux fileté (31) de diamètre intérieur supérieur au diamètre de la tige de vanne (2), se vissant dans le filetage intérieur (18) du haut (15) de la douille (8) ainsi que dans l'écrou (e) (35);

e) en écrou d'extraction (35) fileté intérieurement aveo le même filetage que celui (18) du haut de la douille (8);

f) un support d'extraction (32) permettant le maintien de l'écrou d'extraction (35) pendant sa rotation, à hauteur au moins égale à la hauteur totale de la douille extractible (8) diminuée de sa hauteur de vissage par le tube fileté (31).

9. Système selon la revendication 8, caractérisé en ce que l'écrou (e) (35) et le support (f) (32) forment ensemble une pièce d'extraction (32) dont la base (33) s'appuie sur le corps de vanne (3) autour de la chambre annulaire (4) et qui comprend un logement central (34) permettant de recevoir le dispositif d'étanchéité (1) lors de son extraction de ladite chambre annulaire (4).

10. Système selon la revendication 1, caractérisé en ce que les moyens d'extraction portés par la haute (15) de la douille (8) consistent en des trous radiaux (28) et en ce que le moyen d'extraction externe comporte des crochets s'engageant dans ces trous radiaux (28).

11. Système selon la revendication 1, caractérisé en ce que les moyens d'extraction portés par la douille sont un ou plusieurs trous (29) filetés dans l'épaisseur de son extrémité haute (15), et en ce que le moyen d'extraction externe comportent une ou plusieurs tiges filetées se vissant dans ce ou ces trous filetés (29).

12. Système d'étanchéité selon l'une quelconque des revendications 2 à 7 et 10,11, caractérisé en ce que son dispositif d'étanchéité extractible comprend:

- une douille (80) composée de plusieurs parties démontables consistant en au moins 2 parties cylindriques semi-annulaires jointives (81), comportant chacune une portion de fond annulaire (100) et des moyens d'extraction, et en un fond annulaire extractible (101) sur lequel ces parties cylindriques (81) s'appuient et qui porte sous sa face inférieure une gorge (22), dans laquelle s'encastre le joint d'étanchéité annulaire (24), et sur sa face supérieure des moyens d'extraction;

- des moyens d'étanchéité composés de bagues d'étanchéité compressibles (190, 192) et éventuellement de bagues anti-extrusion segmentées en plusieurs parties jointives.

13. Système selon la revendication 12, caractérisé en ce que l'orifice central du fond annulaire extractible a un diamètre au plus égal au diamètre de la tige (2) augmenté de 0,3 mm, en ce que le fond annulaire extractible (101) comporte une zone annulaire centrale (104) définissant avec la tige de vanne (2) un logement annulaire (106) et en ce que les moyens d'étanchéité comportent des portions de bagues inférieures jointives (190) en graphite expansé moulé et comprimé s'appuyant sur les portions de fond annulaires (100) et ayant des parties centrales annulaires (191) en surépaisseur qui viennent s'encastrer dans ledit logement annulaire (106).

14. Douille porte-garnitures d'étanchéité extractible (8) pour étanchéité entre une tige de vanne (2) et un corps de vanne (3) définissant entre eux une chambre annulaire (4) se terminant par un fond (5) caractérisé en ce qu'elle s'encastre dans ladite chambre annulaire (4) et en ce qu'elle comporte une paroi latérale (14) dont la surface intérieure (13) est au moins en partie cylindrique circulaire et un fond annulaire (10) dont le bord intérieur circulaire (11) a un diamètre supérieur d'au moins 0,2 mm au diamètre de la tige de vanne (2), la face inférieure (21) de ce fond circulaire (10) de la douille (8) portant une gorge circulaire (22) de section droite en U, et en ce qu'elle comporte des moyens d'extraction (18,28,29) portés par l'extrémité supérieure de la douille, lesdits moyens d'extraction faisant partie du groupe constitué par: filetage intérieur (18), au moins deux trous radiaux (28), au moins un trou fileté dans l'épaisseur (29).

## Patentansprüche

1. Abdichtungssystem zwischen einer kreiszylindrischen Stange (2) und einem Ventilkörper (3), die zwischen sich eine durch einen Boden (5) endende Ringkammer (4) begrenzen, das aufweist:

a) eine ausziehbare Dichtungseinrichtung (1), die ihrerseits aufweist:

a.1) eine sich in die Ringkammer (4) einpassende ausziehbare Buchse (8) mit einer Seitenwand (14), deren Innenoberfläche (13) wenigstens zum Teil zylindrisch ist, und einem von der Stange (2) durchsetzten ringförmigen Boden (10) und auch mit Ausziehmitteln (15, 18, 28, 29);

a.2) in die Buchse (8) eingefügte ringförmige Dichtungsmittel (17) mit einem oder mehreren zusammendrückbaren Richtungsringen (19);

a.3) einen ringförmigen Richtungskörper (24), der zwischen dem Boden (10, 21) der Buchse (8) und dem Boden (5) oder einer auf dem Boden (5) der Ringkammmer (4) ruhenden Querstrebe angeordnet ist;

b) ein oder Mittel (26, 27) zum Axialklemmen, die die Dichtungsmittel (17) zwischen diesem oder, diesen Klemmitteln (27) und dem ringförmigen Boden (10) der Buchse (8) zusammendrücken, und ein oder Mittel (26; 27) zum Axialklemmen, die den ringförmigen Dichtungskörper (24) zwischen dem Boden (10) der Buchse (8) und dem Boden (5) der Ringkammer (4) oder auf der auf diesem Boden (5) ruhenden Querstrebe zusammendrücken; dadurch gekennzeichnet, daß

(a'.1) die Buchse (8) keinen quer bezüglich ihrer Seitenwand (14) vorragenden Teil hat, so daß sie völlig in der Ringkammer (4) enthalten sein kann, und ihre Ausziehmittel (15, 18, 28, 29) vom oberen Ende (15) der Seitenwand (14) getragen werden;

(b') die Axialklemmittel (26; 27) einen ringförmigen Abstützteil (27) aufweisen, der in das Innere der Buchse (8) eintritt und gleichzeitig die Dichtungsmittel (17) und den ringförmigen Dichtungskörper (24) zusammendrückt; und

(c) das System außerdem ein äußeres Ausziehmittel (30) aufweist, das mit den von der Buchse (8) getragenen Ausziehmitteln (18) zusammenwirkt.

2. System nach dem Anspruch 1, dadurch gekennzeichnet, daß die untere Fläche (21) des ringförmigen Bodens (10) der Buchse (8) eine Rille (22) aufweist, in die der ringförmige Dichtungskörper (24) eingreift.

3. System nach irgendeinem der Ansprüche 1 oder 2, dadurch gekennzeichnet, daß die in die Buchse (8) eingefügten ringförmigen Dichtungsmittel (17) zwei nichtzusammendrückbare Ringe oder Ringscheiben (20) aufweisen, deren jeder bzw. jede einen höchstens dem um 0,3 mm vermehrten Durchmesser der Stange (2) gleichen Innendurchmesser hat, welche Ringe oder Scheiben (20) unter bzw. über dem Ring (19) oder dem Stapel von zusammendrückbaren Dichtungsringen (19) angeordnet sind.

4. System nach dem Anspruch 3, dadurch gekennzeichnet, daß die ringförmigen Dichtungsmittel (17) einen oder mehrere Dichtungsringe (19) aus expandiertem geformten und komprimierten Graphit eines spezifischen Gewichts im Bereich von 1,4 bis 1,9 g/cm³ aufweisen.

5. System nach dem Anspruch 1, bei dem die Axialklemmittel (26, 27) gleichzeitig eine Ramme (25), deren Auflagestück (26) in die Ringkammer (4), aber nicht in die ausziehbare Buchse (8) eindringen kann, und einen Zwischenkompressionsring (27) mit größerem Innendurchmesser als dem Durchmesser der Ventilstange (2) und mit kleinerem Außendurchmesser als dem Durchmesser der inneren zylindrischen Oberfläche (13) der Buchse (8) aufweisen.

6. System nach dem Anspruch 1, bei dem die von der Buchse getragenen Ausziehmittel das obere Ende (15) ihrer Seitenwand (14) aufweisen, welches Ende (15) aus der Ringkammer (4) herausragt, wenn die Buchse (8) darin aufgenommen ist.

7. System nach irgendeinem der Ansprüche 1 oder 6, bei dem die Axialklemmittel (26, 27) einen am Ventilkörper (3) befestigen Bundring aufweisen, der sich auf dem oberen Ende (15) der Seitenwand (14) der Buchse (8) abstützt.

8. System nach dem Anspruch 1, dadurch gekennzeichnet, daß die vom Oberteil (15) der Buchse (8) getragenen Ausziehmittel aus einem Innengewinde (18) bestehenen und daß das äußere Ausziehmittel (30) wenigstens aufweist:

d) ein Gewindehohlrohr (31) mit größerem Innendurchmesser als dem Durchmesser der Ventilstange (2), das sich in das Innengewinde (18) des Oberteils (15) der Buchse (8) sowie in die Mutter (e) (35) einschraubt;

e) eine Ausziehmutter (35), die ein Innengewinde mit dem gleichen Gewinde wie dem (18) des Oberteils der Buchse (8) aufweist;

f) einen Ausziehhalter (32), der das Halten der Ausziehmutter (35) während ihrer Rotation ermöglicht, mit einer Höhe, die wenigstens gleich der gesamten Höhe der ausziehbaren Buchse (8), vermindert um ihre Schraubhöhe durch das Gewinderohr (31), ist.

9. System nach dem Anspruch 8, dadurch gekennzeichnet, daß die Mutter (e) (35) und der Halter (f) (32) zusammen ein Ausziehstück (32) bilden, dessen Basis (33) sich auf dem Ventilkörper (3) um die Ringkammer (4) herum abstützt und das eine Zentralausnehmung (34) aufweist, die die Aufnahme der Dichtungseinrichtung (1) während ihres Ausziehens aus der Ringkammer (4) ermöglicht.

10. System nach dem Anspruch 1, dadurch gekennzeichnet, daß die vom Oberteil (15) der Buchse (8) getragenen Ausziehmittel aus drei Radiallöchern (28) bestehen und daß das äußere Ausziehmittel Haken zum Eingriff in diese Radiallöcher (28) aufweist.

11. System nach dem Anspruch 1, dadurch gekennzeichnet, daß die von der Buchse getragenen Ausziehmittel ein oder mehrere Löcher (29) mit Gewinde in der Wanddicke ihres oberen Endes (15) sind und daß das äußere Ausziehmittel eine oder mehrere Gewindestangen aufweist, die sich in das oder die Gewindelöcher (29) schrauben.

12. Abdichtungssystem nach irgendeinem der Ansprüche 2 bis 7 und 10, 11, dadurch gekennzeichnet, daß seine ausziehbare Dichtungseinrichtung aufweist:

– eine Buchse (80), die aus mehreren demontierbaren Teilen zusammengesetzt ist, die aus wenigstens zwei aneinandergrenzenden zylindrischen halbringförmigen Teilen (81), deren jeder einen Teil eines ringförmigen Bodens (100) und Ausziehmittel aufweist, und aus einem ausziehbaren ringförmigen Boden (101) bestehen, auf dem sich diese zylindrischen Teile (81) abstützen und der unter seiner Unterseite eine Rille (22) trägt, in die der ringförmige Dichtungskörper (24) eingreift, und auf seiner Oberseite Ausziehmittel trägt;

– Dichtungsmittel, die aus zusammendrückbaren Dichtungsringen (190, 192) und ggf. in mehrere aneinandergrenzende Teile unterteilten Antiextrusionsringen zusammengesetzt sind.

13. System nach dem Anspruch 12, dadurch gekennzeichnet, daß die zentrale Öffnung des ausziehbaren ringförmigen Bodens einen Durchmesser hat, der höchstens gleich dem Durchmesser der Stange (2), vermehrt um 0,3 mm, ist, daß der ausziehbare ringförmige Boden (101) eine zentrale ringförmige Zone (104) aufweist, die mit der Ventilstange (2) eine ringförmige Ausnehmung (106) bildet, und daß die Dichtungsmittel Teile von aneinandergrenzenden unteren Ringen (190) aus expandiertem geformtem und komprimiertem Graphit aufweisen, die sich auf den ringförmigen Bodenteilen (100) abstützen und zentrale ringförmige Teile (191) mit Überbreite haben, die in diese ringförmige Ausnehmung (106) zum Eingriff gelangen.

14. Ausziehbahre, zubehörtragende Abdichtungsbuchse (8) zum Abdichten zwischen einer Ventilstange (2) und einem Ventilkörper (3), die zwischen sich eine Ringkammer (4) bilden, die mit einem Boden (5) endet, dadurch gekennzeichnet, daß sie in die Ringkammer (4) eindringt und daß sie eine Seitenwand (14), deren Innenoberfläche (13) wenigstens teilweise zylindrisch-kreisförmig ist, und einen ringförmigen Boden (10) aufweist, dessen kreisförmiger innerer Rand (11) einen wenigstens 0,2 mm größeren Durchmesser als den Durchmesser der Ventilstange (2) hat, wobei die Unterseite (21) dieses kreisförmigen Bodens (10) der Buchse (8) eine kreisförmige Rille (22) mit U-Querschnitt trägt, und daß sie Ausziehmittel (18, 28, 29) aufweist, die vom oberen Ende der Buchse getragen sind, welche Ausziehmittel Teil der Gruppe sind, die aus:

Innengewinde (18), wenigstens zwei Radiallöchern (28) und wenigstens einem Loch (29) mit Gewinde in der Wanddicke besteht.

## Claims

1. A system for sealing between a circular cylindrical stem (2) and a valve body (3) which between them define an annular chamber (4) which terminates with a bottom (5), and comprising:

a) an extractible sealing device (1) which itself comprises:

a.1) an extractible sleeve (8) which is fitted into said annular chamber (4) comprising a lateral wall (14), the internal surface (13) of which is at least in part cylindrical and an annular bottom (10) through which the stem (2) passes, and also comprising extraction means (15, 18, 28, 29);

a.2) annular sealing means (17) which are inserted into the sleeve (8) and comprising one or more compressible sealing rings (19); and

a.3) an annular sealing joint (24) which is disposed between the bottom (10, 21) of the sleeve (8) and the bottom (5) or a spacer resting on the bottom (5) of the annular chamber (4); and

b) one or more axial clamping means (26, 27) for compressing said sealing means (17) between said one or more clamping means (27) and the annular bottom (10) of the sleeve (8), and one or more axial clamping means (26, 27) for compressing said annular sealing joint (24) between the bottom (10) of the sleeve (8) and the bottom (5) of the annular chamber (4) or against the spacer resting on said bottom (5); characterised in that:

a'.1) the sleeve (8) does not have any portion which projects transversely with respect to its lateral wall (14), in such a way that it can be entirely contained in the annular chamber (4), and its extraction means (15, 18, 28, 29) are carried by the top end (15) of said lateral wall (14);

b') the axial clamping means (26, 27) comprise an annular bearing portion (27) which extends into the interior of the sleeve (8), compressing both the sealing means (17) and the annular sealing joint (24); and

c) the system further comprises an external extraction means (30) co-operating with the extraction means (18) carried by the sleeve (8).

2. A system according to claim 1 characterised in that the bottom face (21) of the annular bottom (10) of the sleeve (8) comprises a groove (22) into which said annular sealing joint (24) is fitted.

3. A system according to either one of claims 1 and 2 characterised in that the annular sealing means (17) which are inserted into the sleeve (8) comprise two incompressible annular rings or collars (20) which are each of an inside diameter that is at most equal to the diameter of the stem (2) increased by 0.3 mm, said rings or collars (20) being respectively below and above the ring (19) or the stack of compressible sealing rings (19).

4. A system according to claim 3 characterized in that the annular sealing means (17) comprise one or more sealing rings (19) of moulded and compressed expanded graphite of a density of between 1.4 and 1.9 g/cm$^3$.

5. A system according to claim 1 wherein the axial clamping means (26, 27) comprise both a pressing member (25) having a bearing portion (26) which can engage into the annular chamber (4) but not into the extractible sleeve (8) and an intermediate compression ring (27) of an internal diameter which is larger than the diameter of the valve stem (2) and an external diameter which is smaller than the diameter of the cylindrical internal surface (13) of the sleeve (8).

6. A system according to claim 1 wherein the extraction means carried by the sleeve comprise the top end (15) of its lateral wall (14), said end (15) projecting beyond the annular chamber (4) when the sleeve (8) is fitted therein.

7. A system according to either one of claims 1 and 6 wherein the axial clamping means (26, 27) comprise a flange fixed on the valve body (3) and bearing against the top end (15) of the lateral wall (14) of the sleeve (8).

8. A system according to claim 1 characterised in that the extraction means carried by the top (15) of the sleeve (8) consist of an internal screwthread (18) and that the external extraction means (30) comprises at least:

d) a hollow screwthreaded tube (31) of an internal diameter which is larger than the diameter of the valve stem (2), being screwed into the internal screwthread (18) at the top (15) of the sleeve (8) and the nut (e) (35);

e) an extraction nut (35) which is internally screwthreaded with the same screwthread as the screwthread (18) at the top of the sleeve (8); and

f) an extraction support (32) permitting the extraction nut (35) to be held during rotary movement thereof, of a height which is at least equal to the total height of the extractible sleeve (8) less its height of screwing engagement by the screwthreaded tube (31).

9. A system according to claim 8 characterised in that the nut (e) (35) and the support (f) (32) together form an extraction portion (32), the base (33) of which bears against the valve body (3) around the annular chamber (4) and which comprises a central recess (34) for receiving the sealing device (1) upon extraction thereof from said annular chamber (4).

10. A system according to claim 1 characterised in that the extraction means carried by the top (15) of the sleeve (8) consist of radial holes (28) and that the external extraction means comprises hooks engaging into said radial holes (28).

11. A system according to claim 1 characterised in that the extraction means carried by the sleeve are one or more screwthreaded holes (29) in the thickness of its top end (15) and that the external extraction means comprises one or more screwthreaded rods which are screwed into said screwthreaded hole or holes (29).

12. A sealing system according to any one of claims 2 to 7 and 10 and 11 characterised in that its extractible sealing device comprises:

    – a sleeve (80) composed of a plurality of detachable parts consisting of at least two contiguous semi-annular cylindrical parts (81) each comprising an annular bottom portion (100) and extraction means, and also consisting of an extractible annular bottom (101) on which said cylindrical parts (81) are supported and which bears on its bottom face a groove (22) into which the annular sealing joint (24) fits and on its top face extraction means; and

    – sealing means composed of compressible sealing rings (190, 192) and possibly segmented anti-extrusion rings in a plurality of contiguous parts.

13. A system according to claim 12 characterised in that the central orifice of the extractible annular bottom is of a diameter which is at most equal to the diameter of the stem (2) plus 0.3 mm, that the extractible annular bottom (101) comprises a central annular zone (104) which with the valve stem (2) defines an annular recess (106) and that the sealing means comprise contiguous lower ring portions (190) of moulded and compressed expanded graphite, bearing against the annular bottom portions (100) and having annular central parts (191) in projecting relationship, which fit into said annular recess (106).

14. An extractible sealing gasket-carrier sleeve (8) for sealing between a valve stem (2) and a valve body (3) which between them define an annular chamber (4) terminating with a bottom (5) characterised in that it fits into said annular chamber (4) and that it comprises a lateral wall (14), the internal surface (13) of which is at least in part circular cylindrical, and an annular bottom (10) of which the circular internal edge (11) is of a diameter that is larger by at least 0.2 mm than the diameter of the valve stem (2), the bottom face (21) of said circular bottom (10) of the sleeve (8) carrying a circular groove (22) of U-shaped cross-section, and that it comprises extraction means (18, 28, 29) carried by the upper end of the sleeve, said extraction means forming part of the group formed by: internal screwthread (18), at least two radial holes (28) and at least one screwthreaded hole in the thickness (29).

**FIG.1**

**FIG.2a**   **FIG.2b**   **FIG.2c**

FIG.3

EP 0 263 042 B1

FIG.4